# EUROPÄISCHE PATENTSCHRIFT

(11) **EP 1 081 195 B1**
(45) Veröffentlichungstag und Bekanntmachung des Hinweises auf die Patenterteilung: **12.04.2006**
(21) Anmeldenummer: 00117475.4
(22) Anmeldetag: 12.08.2000
(51) Int. Cl.: C09B 67/08, C09B 67/10, C09B 67/06

(54) **Verfahren zur Herstellung von Pigmentgranulaten**
Process for the manufacture of pigment granules
Procédé de fabrication de granulés de pigment

(30) Priorität: 28.08.1999 DE 19941061
(43) Veröffentlichungstag der Anmeldung: 07.03.2001
(73) Patentinhaber: Clariant Produkte (Deutschland) GmbH, 65929 Frankfurt am Main (DE)
(72) Erfinder: Metz, Hans Joachim, Dr., 64285 Darmstadt (DE); Ohleier, Heinfred, 65451 Kelsterbach (DE)

(56) Entgegenhaltungen:
- EP-A- 0 282 855
- EP-A- 0 902 061
- DE-A- 3 515 797
- FR-A- 2 017 013
- FR-A- 2 405 980
- GB-A- 2 036 057

## Beschreibung

Die Erfindung betrifft ein Verfahren zur Herstellung einer organischen Farbmittelzusammensetzung in Granulatform, bestehend aus mit Wachs belegten organischen Pigmenten.

Organische Pigmente fallen bei der Herstellung meist in Form von Pulvern an. Die Pulver bestehen aus sehr kleinen Teilchen und sind daher stark staubend. Staubentwicklung führt zur Kontamination von Geräten, Anlagen und Produkten, so daß vor allem bei Produktumstellungen Reinigungsarbeiten mit hohem finanziellem und zeitlichem Aufwand durchgeführt werden müssen. Dadurch ergeben sich Forderungen seitens der Pigmentverarbeiter zur Bereitstellung nichtstaubender Pigmentformen.

Zur Nutzung müssen Pigmente im Anwendungsmedium dispergiert werden. Liegen die Pigmente als Pulver vor, erfolgt die Dispergierung meist mit hohem Energieeintrag, z.B. bei der Verwendung von Zweischneckenextrudem in der Kunststoffeinfärbung. Vorteilhaft für die Anwendung sind deshalb Pigmente, die in einer vordispergierten Form vorliegen.

Die JP 10-251533 beschreibt Chinacridonpigmente, die durch eine Wachsbelegung über einen Isobutanolfinish in eine vordispergierte Form gebracht werden. Die mit Wachs belegten Chinacridonpigmente, die eine Partikelgröße von etwa 0,05 bis 0,3 µm besitzen, werden als Pulver eingesetzt und besitzen somit den Nachteil der Staubentwicklung.

Die DE-A1-29 40 156 und WO 92/07912 beschreiben Verfahren zur Herstellung von staubarmen, frei fließenden Pigmentgranulaten durch Verwendung eines Fließbettverfahrens. Durch Durchblasen von Luft durch das Pigmentpulver wird ein Fließbett aus aufgewirbeltem Pigmentpulver erzeugt, das mit einer wäßrigen Lösung, Dispersion oder Emulsion eines Granulierhilfsmittels besprüht wird.

Bei einem anderen Verfahren (DE 39 35 815 C2) wird das Pigment in einem Mischgranulator mit einer Wachsdispersion besprüht. Diese Verfahren sind mit dem Nachteil behaftet, daß das Pigment nicht in einer für die spätere Anwendung günstigen vordispergierten Form vorliegt, da die Oberfläche der Pigmentpartikel nur unvollständig mit dem Wachs oder dem Hilfsmittel belegt ist. Außerdem ist es nicht möglich, jedes Pulverpigment zu einem Fließbett zu verwirbeln (Powder Technolgy 57, 127-133 (1989)), so daß diese Methode nicht allgemein verwendet werden kann.

Die genannten Verfahren besitzen entweder den Nachteil, daß ein vordispergiertes, aber staubendes Pigmentpulver (JP 10-251 533) oder daß ein nichtstaubendes, aber unzureichend vordispergiertes Pigmentgranulat hergestellt wird. Außerdem gehen die bekannten Verfahren zur Herstellung einer nichtstaubenden Pigmentform von fertigem Pigmentpulver aus und verursachen daher zusätzliche Arbeitsschritte, die die Kosten erhöhen.

Aufgabe der vorliegenden Erfindung ist es, ein Verfahren zur Herstellung staubfreier, rieselfähiger und leicht dispergierbarer organischer Pigmente bereitzustellen, das im Vergleich zur Herstellung des entsprechenden Pigmentpulvers keine zusätzlichen Prozeßschritte benötigt.

Es wurde gefunden, daß sich die im Stand der Technik aufgeführten Nachteile überraschenderweise durch eine Sprühtrocknung von organischen Pigmenten, die während eines bei der Pigmentherstellung durchzuführenden Finishprozesses mit einer Wachs- oder Polymerschicht umhüllt wurden, gelöst werden.

Gegenstand der vorliegenden Erfindung ist ein Verfahren zur Herstellung eines leicht dispergierbaren Pigmentgranulats, dadurch gekennzeichnet, daß ein organisches Pigment während des Finishprozesses in einem organischen oder wäßrig-organischen Medium mit einem Wachs oder wachsartigen Polymer versetzt wird, dann das organische Lösemittel entfernt wird, beispielsweise durch Wasserdampfdestillation oder Auswaschen mit Wasser, und eine wäßrige Suspension des Pigments sprühgetrocknet wird.

Während des Finishprozesses werden die Pigmentpartikel mit dem Wachs oder wachsartigen Polymer in innigen Kontakt gebracht. Nach Entfernen des Lösemittels durch Wasserdampfdestillation wird eine sprühfähige wäßrige Suspension erhalten. Dennoch kann es zweckmäßig sein, die Suspension vor der Sprühtrocknung abzufiltrieren und durch Waschen eventuell vorhandene Salze zu entfemen und den durch die Filtration erhaltenen Preßkuchen wieder zu einer sprühfähigen Suspension anzurühren.

Beim Auswaschen mit Wasser wird zweckmäßigerweise so verfahren, dass der Feststoff abfiltriert, mit Wasser lösemittelfrei gewaschen und der dabei entstandene Preßkuchen mit Wasser zu einer sprühfähigen Suspension verdünnt wird.

Durch die Sprühtrocknung wird zum einen eine Granulierung in eine geeignete Partikelgröße erreicht, ohne daß die während des Lösemittelfinishs erzielte Umhüllung der Pigmentpartikel mit dem Wachs oder Polymer beschädigt wird. Zum anderen wird die bei der Herstellung von Pigmentpulvern notwendige Trocknung und Mahlung vermieden.

Die erfindungsgemäßen Pigmentgranulate weisen einen mittleren Teilchendurchmesser von 0,05 bis 5 mm auf. Besonders bevorzugt sind Granulate mit Teilchendurchmessern im Bereich von 0,1 bis 2 mm. Durch ihre meist kugelförmige Gestalt sind die Granulate rieselfähig und damit gut dosierbar. Aufgrund ihrer Größe und Gewichtes sind die Granulate besonders staubarm.

Als organische Pigmente kommen z.B. Azopigmente, wie Monoazo-, Disazo-, Naphtol-, Metallkomplexpigmente, wie auch polycyclische Pigmente, wie Isoindolinon- und Isoindolinpigmente, Anthanthron-, Thioindigo-, Chinophthalon-, Anthrachinon-, Dioxazin-, Phthalocyanin-, Chinacridon-, Perylen-, Perinon-, Diketopyrrolopyrrol- und Azomethinpigmente, in Betracht.

Wachse sind nicht einheitlich chemisch definiert und bilden eine Gruppe von Stoffen mit gleichen oder ähnlichen Gebrauchseigenschaften, gekennzeichnet durch besondere physikalische Eigenschaften. So bezeichnet der Begriff "Wachs" eine Reihe natürlicher oder künstlich gewonnener Stoffe, die in der Regel folgende Eigenschaften aufweisen: Bei 20°C knetbar, fest bis brüchig hart, grob bis feinkristallin, durchscheinend bis opak, jedoch nicht glasartig; über 40°C ohne Zersetzung schmelzend, schon wenig oberhalb des Schmelzpunktes verhältnismäßig niedrigviskos und nicht fadenziehend, stark temperaturabhängige Konsistenz und Löslichkeit, unter leichtem Druck polierbar (vgl. Ullmanns Encyklopädie der technischen Chemie, Band 24, 4. Auflage 1983, S. 1-49, Verlag Chemie, Weinheim und Römpps Chemie-Lexikon, Band 6, 8. Auflage1988, S. 463, Franck'sche Verlagshandlung).

Als Wachse werden bevorzugt: Naturwachse, wie Pflanzenwachse, z.B. Carnaubawachs, Candellilawachs, und tierische Wachse, z.B. Bienenwachs, modifizierte Naturwachse, wie z.B. Paraffinwachse, Mikrowachse, teilsynthetische Wachse, wie z.B. Montanesterwachse, oder vollsynthetische Wachse, wie Polyolefinwachse, z.B. Polyethylen und Polypropylenwachse, Polyethylenglykolwachse, Cycloolefincopolymerwachse, Amidwachse, wie z.B. N,N'-Distearylethylendiamin, sowie chlor- oder fluorhaltige Polyolefinwachse oder Polyethylen-Polytetrafluorethylen-Wachsmischungen.

Besonders bevorzugt sind Polyolefinwachse, sowie polare Gruppen enthaltende Polyolefinwachse, entstanden durch nachträgliche Oxidation des Polyolefinwachses, durch Pfropfreaktion mit Carbonsäure-, Carbonsäureester-, Carbonsäureanhydrid- oder Hydroxygruppen enthaltenden Monomeren oder durch Copolymerisation aus einem Olefin und einem Carbonsäure-, Carbonsäureester-, Carbonsäureanhydrid- oder Hydroxygruppen enthaltenden Monomer.

Als Polymere sind höhermolekulare Verbindungen, die einen wachsartigen Charakter aufweisen und vorzugsweise durch Polykondensations- oder Polyadditionsverfahren hergestellt wurden, geeignet, z.B. thermoplastische Polyester-, Epoxid-, Styrol-Acrylat-Copolymer-, Styrol-Butadien-Copolymer-, Cycloolefin-copolymer-Harze, wie z. B. ®Topas.

Um eine ausreichende Löslichkeit bei erhöhter Temperatur in organischen Lösungsmitteln zu besitzen, besitzen die Polymere meist ein Zahlenmittel des Molekulargewichts (M̅ₙ) von bis zu 20000. Bevorzugt sind Wachse mit einem Zahlenmittel des Molekulargewichts (M̅ₙ) bis zu 10000, besonders bevorzugt mit einem Zahlenmittel des Molekulargewichts (M̅ₙ) bis zu 5000.

Der Tropfpunkt der erfindungsgemäß eingesetzten Wachse oder die Erweichungstemperatur der Polymere liegt vorzugsweise im Bereich von 60 bis 180°C, besonders bevorzugt im Bereich von 80 bis 140°C.

Je nach Anwendungsgebiet des Pigmentgranulates kann die Menge und die Art des Wachses oder Polymers variieren, vor allem um die Verträglichkeit mit dem Anwendungsmedium zu gewährleisten. Um ein definiertes Eigenschaftsprofil zu erzeugen, ist es auch möglich, eine Mischung aus mindestens zwei verschiedenen Wachsen oder Polymeren zu verwenden.

Zweckmäßigerweise wird das organische Pigment in einer Menge von 50 bis 99 Gew.-%, vorzugsweise aus 60 bis 95 Gew.-%, und das Wachs oder Polymer in einer Menge von 1 bis 50 Gew.-%, vorzugsweise aus 5 bis 40 Gew.-%, bezogen auf das Gesamtgewicht des Pigmentgranulats, eingesetzt.

Unter Finishprozeß versteht der Fachmann eine Nachbehandlung des bei der Synthese entstandenen Rohpigments, meist in Form eines wasserfeuchten Preßkuchens, einer wäßrigen Pigmentsuspension oder eines Trockenpigments, in einem Finishmedium, z.B. in einem organischem Lösungsmittel oder einer Mischung aus Wasser und organischem Lösungsmittel, um eine für die spätere Anwendung vorteilhafte Kristallform und/oder Kristallmodifikation zu erzeugen. Zweckmäßigerweise wird dabei eine 2 bis 30 gew.-%ige Suspension des Rohpigments oder Rohpigmentpreßkuchens im Finishmedium, gegebenenfalls unter Erhitzen, unter Zugabe des Wachses oder Polymers gerührt, geknetet und/oder unter Rückfluß erhitzt.

Als Finishmedium wird vorzugsweise ein solches organisches Lösungsmittel oder eine solche Mischung aus Wasser und einem organischen Lösungsmittel ausgewählt, das bei der Finish-Temperatur das verwendete Wachs oder Polymer partiell oder vollständig löst und durch Wasserdampfdestillation oder Auswaschen entfernt werden kann. Bevorzugte Lösungsmittel sind aliphatische Alkohole, wie z.B. n-Butanol, Isobutanol, n-Octanol, Isooctanol; aromatische Kohlenwasserstoffe, wie z.B. Benzol, Toluol, Xylol, Kresol, Chlorbenzol, 1,2-Dichlorbenzol; Ester wie z.B. Ethylacetat, Butylacetat; Ketone wie z.B. Methylethylketon, Methylisobutylketon oder Cyclohexanon; dipolar aprotische Lösungsmittel wie z.B. N-Methylpyrrolidon, Dimethylsulfoxid oder Sulfolan.

Die Finish-Temperaturen können beispielsweise im Bereich von 20 bis 200°C, vorzugsweise 60 bis 180°C, liegen. Der Finishprozeß dauert zweckmäßigerweise 1 bis 24 Stunden, bevorzugt 2 bis 10 Stunden. Es kann vorteilhaft sein, den Finishprozess so durchzuführen, dass zunächst, z.B. für 1 - 10 Stunden auf 60 bis 200°C erhitzt, dann auf 100 bis 20°C abgekühlt und das Wachs oder Polymer zugegeben wird, und dann erneut auf 60 bis 200°C erhitzt wird. Es ist auch möglich, das Wachs oder Polymer während des Finishprozesses dem Finishansatz direkt, d.h. ohne zwischenzeitliches Abkühlen, zuzugeben.

Bei dem Finishprozeß wird das üblicherweise lipophile Pigment von der organischen Phase (Lösungsmittel und Wachs/Polymer) umhüllt. Diese Vorgehensweise bietet den Vorteil, daß das Pigment feinverteilt in der organischen Phase vorliegt. Eine endgültige Bedeckung der Pigmentoberfläche mit Wachs/Polymer wird durch die Abtrennung des Lösungsmittels erreicht, was durch eine Wasserdampfdestillation (Temperatur z.B. 80 bis 100°C) oder durch Auswaschen mit Wasser auf einem Filter, zweckmäßig bei 20 bis 95°C, geschieht. Danach liegt eine wäßrige Suspension von mit Wachs/Polymer belegten Pigmenten vor. Die Suspension wird gegebenenfalls mit Wasser auf die gewünschte Konzentration, zweckmäßigerweise auf eine 5 bis 30 gew.-%ige Suspension des mit Wachs/Polymer belegten Pigments, eingestellt, gegebenenfalls mit Hilfe einer Kolloidmühle oder eines vergleichbaren Aggregates homogenisiert und anschließend zum Granulat sprühgetrocknet. In manchen Fällen kann für eine optimale Benetzung der Pigmentoberfläche mit dem Wachs/Polymer die Zugabe eines Tensids günstig sein. Als Tenside kommen sowohl kationische Tenside, wie z.B. quartäre Ammoniumsalze, langkettige Alkylamine (im neutral bis schwach saurem pH-Bereich); anionische Tenside wie z.B. Carbonsäuren, Sulfonsäuren, Sulfosäureester, wie z.B. Sulfobemstein-säureester, und deren Salze; Amphotenside, wie z.B. Betaine und nichtionische Tenside, wie z.B. Zuckeralkylate und -acylate, ethoxylierte Zuckeralkylate und -acylate, Glycerinester, Polyethylenglykolester und ethoxylierte Fettsäuren, Fettalkohol- und Fettaminethoxylate, in Betracht.

Das Tensid kann vor dem Finish oder während des Finishprozesses zugegeben werden.

Zur Sprühtrocknung sind Sprühtürme mit Einstoffdüse oder Sprühtürme, die eine Aufbaugranulierung durchführen (z.B. Fluidized bed Spray Drier), geeignet. Bei Sprühtürmen mit Einstoffdüse wird die Suspension in Form größerer Tropfen versprüht und das Wasser verdampft. Liegen die Temperaturen im Sprühturm oberhalb des Tropfpunktes des Wachses/Polymers, schmilzt das Wachs/Polymer auf und verläuft zu einem kugelförmigen Granulat mit glatter Oberfläche.

Bei FSD-Sprühtürmen wird die Suspension zu einem feinen Pulver versprüht. Die kräftige Fluidisierung im Fließbett und die Rezirkulation der durch die Abluft mitgerissenen Feinpulverpartikel, die in einem Vorzyklon abgeschieden werden, bewirken, daß die Sprühtrocknung in einer turbulenten Pulverwolke stattfindet. Hierdurch entsteht ein Puderungseffekt und bei Temperaturen im Turm oberhalb des Tropfpunktes des Wachses/Polymers verkleben die Partikel zu einem himbeerförmigen Granulat. Die Restfeuchte und die Granulometrie werden im Fließbett kontrolliert.

Die Gaseintrittstemperatur im Sprühturm liegt normalerweise im Bereich von 180 bis 300°C, bevorzugt 190 bis 280°C, die Gasaustrittstemperatur im Bereich von 70 bis 150°C, bevorzugt 90 bis 130°C.

Die Granulate können zum Einfärben von hochmolekularen organischen Materialien eingesetzt werden. Diese können natürlicher oder synthetischer Herkunft sein. Es kann sich z.B. um Naturharze, trocknende Oele oder Kautschuk handeln. Es kann sich aber auch um abgewandelte Naturstoffe handeln, wie z.B. Chlorkautschuk, Ceflulosederivate, wie Celluloseester oder Celluloseether, und besonders um vollsynthetische organische Polymere (Kunststoffe), die durch Polymerisation, Polykondensation oder Polyaddition hergestellt sind. Aus der Klasse der durch Polymerisation hergestellten Kunststoffe seien besonders folgende genannt: Polyolefine, wie z.B. Polyethylen, Polypropylen, Polyisobutylen, und substituierte Polyolefine, wie z.B. Polystyrol, Polyvinylchlorid, Polyvinylidenchlorid, Polyvinylacetale, Polyacrylnitril, Polyacrylsäure, Polymethacrylsäure, Polyacrylsäure- und Polymethacrylsäureester oder Polybutadien, sowie Copolymerisate davon. Aus der Klasse der durch Polyaddition und Polykondensation hergestellten Kunststoffe seien genannt: Polyester, Polyamide, Polyimide, Polycarbonate, Polyurethane, Polyether, Polyacetale, sowie die Kondensationsprodukte von Formaldehyd mit Phenolen (Phenoplast) und die Kondensationsprodukte von Formaldehyd mit Harnstoff, Thioharnstoff und Melamin (Aminoplaste).

Das genannte hochmolekulare organische Material kann einzeln oder in Mischungen in Form von Kunststoffmassen oder -schmelzen vorliegen. Es kann auch in Form seiner Monomere vorliegen, die nach dem Färben polymerisiert werden.

Die erfindungsgemäßen Pigmentgranulate können in jedem Mengenverhältnis, das zum Einfärben des hochmolekularen organischen Materials notwendig ist, eingesetzt werden, üblicherweise in Mengen von 0,1 bis 30 Gew.-%, bevorzugt 1 bis 20 Gew.%, bezogen auf das Gesamtgewicht des pigmentierten hochmolekularen organischen Materials.

Zum Einfärben des hochmolekularen organischen Materials können die erfindungsgemäßen Granulate für sich alleine eingesetzt werden. Zur Einstellung verschiedener Farbtöne oder Farbeffekte ist es auch möglich, andere Farbmittel, wie z.B. weiße, farbige oder schwarze Pigmente, sowie Effektpigmente zusätzlich neben den erfindungsgemäßen Granulaten dem hochmolekularen organischem Material zuzusetzen.

Die Granulate stellen hochkonzentrierte Farbmittel dar, in denen die Pigmente in einer vordispergierten Form, ähnlich einem Masterbatch, vorliegen. Zum Einfärben des hochmolekularen organischen Materials muß daher keine große Dispergierarbeit mehr geleistet werden und es genügt z.B. ein Durchmischen der erfindungsgemäßen Granulate mit dem hochmolekularen organischen Material in Rollmühlen, Mixem, anderen Mahlaggregaten oder im Einschneckenextruder.

### Beispiele

### Beispiel 1

27,1 kg salzfreier, wasserfeuchter Presskuchen von ungefinishtem Rohpigment P.Y. 180 (entspricht 7,5 kg Trockenpigment) werden in 33,5 kg Wasser mit Hilfe eines Faßrührers dispergiert. Nach Zugabe von 80,8 kg Isobutanol und 5,0 kg des Polyethylenwachses PED 522 (Clariant GmbH) wird der Ansatz 5 Stunden bei 150°C gerührt. Dabei finden der Finishprozeß und die Wachsbelegung des Pigmentes statt. Nach dem Finish wird das Isobutanol durch Wasserdampfdestillation entfernt und man erhält eine wäßrige Suspension von mit Wachs belegtem Pigment P.Y. 180.
Durch Zugabe von Wasser wird die Suspension auf eine Feststoffkonzentration von 10 Gew.-% gestellt, dispergiert und durch Passieren durch eine Kolloid-Mühle homogenisiert. Anschließend wird die homogene Suspension in einem FSD-Sprühturm versprüht und dabei granuliert (Gaseintrittstemperatur: 190°C; Gasaustrittstemperatur: 100°C; Bettemperatur: 75°C).
Man erhält ein Pigmentgranulat mit himbeerartiger Struktur.

Das Staubverhalten des Granulates wird mit Hilfe eines Sedimentationsstaubmeßgerätes ermittelt. Die Probe fällt aus einem Beschickungssystem durch ein Fallrohr und prallt auf eine Bodenplatte. Der zeitliche Verlauf der Sedimentation wird photometrisch gemessen.
Die Meßskala reicht von 0 (nicht staubend) bis 16 (stark staubend).

Die Staubzahl beträgt 1,1, während das entsprechende Pulverpigment eine Staubzahl von 15,9 hat. Die Coloristik wurde in Polyethylen geprüft und entspricht dem Pulvertyp.

### Beispiel 2

Durchführung wie Beispiel 1, jedoch mit folgendem Ansatz:
25,32 kg feuchter Preßkuchen P.Y. 180 (entspricht 7,0 kg Trockenpigment)
31,10 kg Wasser
75,54 kg Isobutanol
3,0 kg Wachs PED 522 (Clariant GmbH)
Die Staubzahl beträgt 0,1. Die Coloristik wurde in Polyethylen geprüft und entspricht dem Pulvertyp.

### Beispiel 3

Durchführung wie Beispiel 1, jedoch mit folgendem Ansatz:
25,32 kg feuchter Preßkuchen P.Y. 180 (entspricht 7,0 kg Trockenpigment)
30,50 kg Wasser
76,09 kg Isobutanol
3,0 kg Wachs PE 890 (Copolymer aus Vinylacetat und Ethylen)
Die Coloristik wurde in Polyethylen geprüft und entspricht dem Pulvertyp.

### Beispiel 4

27,1 kg salzfreier, wasserfeuchter Presskuchen des ungefinishten Rohpigments P.Y. 180 (entspricht 7,5 kg Trockenpigment) werden in 33,5 kg Wasser mit Hilfe eines Faßrührers dispergiert. Nach Zugabe von 80,8 kg Isobutanol und 5,0 kg des Polyethylenwachses PED 522 (Clariant GmbH) wird der Ansatz 5 Stunden bei 150°C gerührt. Dabei finden der Finishprozeß und die Wachsbelegung des Pigmentes statt. Nach dem Finish wird das Isobutanol durch Wasserdampfdestillation entfernt und man erhält eine wäßrige Suspension von mit Wachs belegtem Pigment P.Y. 180.
Durch Zugabe von Wasser wird die Suspension auf eine Feststoffkonzentration von 10 Gew.% gestellt, dispergiert und durch Passieren durch eine Kolloid-Mühle homogenisiert. Anschließend wird die homogene Suspension in einem Sprühturm mit Einstoffdüse versprüht (Gaseintrittstemperatur: 260°C; Gasaustrittstemperatur: 120°C). Man erhält ein kugelförmiges Pigmentgranulat.
Die Coloristik wurde in Polyethylen geprüft und entspricht dem Pulvertyp.

### Beispiel 5

27,1 kg salzfreier, wasserfeuchter Presskuchen von ungefinishtem Rohpigment P.R. 122 (entspricht 6,1 kg Trockenpigment) werden in einer Mischung aus 38,3 kg Isobutanol, 1 kg 33 gew.-%iger Natronlauge und 10,2 kg Wasser dispergiert. Nach Zugabe von 3,34 kg des Polyethylenwachses PED 522 (Clariant GmbH) wird das Pigment 5 Stunden bei 125°C gefinisht. Das Isobutanol wird durch Wasserdampfdestillation entfernt und man erhält eine wäßrige Suspension von mit Wachs belegten P.R. 122.

Durch Zugabe von Wasser wird die Suspension auf eine Feststoffkonzentration von 10 Gew.-% gestellt, dispergiert und durch Passieren durch eine Kolloid-Mühle homogenisiert. Anschließend wird die homogene Suspension in einem FSD-Sprühturm versprüht und dabei granuliert. Man erhält ein Pigmentgranulat mit himbeerartiger Struktur. Die Coloristik wurde in Polyethylen geprüft und entspricht dem Pulvertyp.

### Beispiel 6

33,5 kg salzfreier, wasserfeuchter Presskuchen (22,2 Gew.-%) von ungefinishtem Rohpigment P.O. 72 (entspricht 7,4 kg Trockenpigment) werden in 33,9 kg Wasser mit Hilfe eines Faßrührers dispergiert. Nach Zugabe von 50,9 kg Isobutanol wird der Ansatz 3 Stunden bei 160°C gerührt. Anschließend wird unter Druck 1,86 kg ®Licowax PED 121 (Clariant GmbH) zugegeben und eine weitere Stunde bei 160°C gerührt. Nach dem Finishprozess wird das Isobutanol durch Wasserdampfdestillation entfernt und man erhält eine wässrige Suspension von mit Wachs belegtem P.O. 72.
Die wässrige Suspension wird durch Passieren durch eine Kolloid-Mühle homogenisiert. Anschließend wird die homogene Suspension in einem Sprühturm mit Einstoffdüse versprüht (Gaseintrittstemperatur: 260°C; Gasaustrittstemperatur: 120°C). Man erhält ein kugelförmiges Pigmentgranulat.
Die Coloristik des Granulats wurde in Polyethylen geprüft und entspricht dem Pulvertyp.

### Beispiel 7

35,7 kg salzfreier, wasserfeuchter Presskuchen (20,8 Gew.-%) von ungefinishtem Rohpigment P.O. 72 (entspricht 7,4 kg Trockenpigment) werden in 31,7 kg Wasser mit Hilfe eines Faßrührers dispergiert. Nach Zugabe von 50,9 kg Isobutanol wird der Ansatz 3 Stunden bei 160°C gerührt. Anschließend werden unter Druck 1,98 kg ®Licowax PED 121 (Clariant GmbH) und 4,96 kg ®Tergitol 15-S-20 (Union Carbide) zugegeben und eine weitere Stunde bei 160°C gerührt. Nach dem Finishprozess wird das Isobutanol durch Wasserdampfdestillation entfernt und man erhält eine wässrige Suspension von mit Wachs belegtem P.O. 72.
Die wässrige Suspension wird durch Passieren durch eine Kolloid-Mühle homogenisiert.
Anschließend wird die homogene Suspension in einem Sprühturm mit Einstoffdüse versprüht (Gaseintrittstemperatur: 260°C; Gasaustrittstemperatur: 120°C). Man erhält ein kugelförmiges Pigmentgranulat.

Die Coloristik des Granulats wurde in Polyethylen geprüft und entspricht dem Pulvertyp.

### Beispiel 8

33,5 kg salzfreier, wasserfeuchter Presskuchen von ungefinishtem Rohpigment P.O. 72 (entspricht 7,4 kg Trockenpigment) werden in 33,9 kg Wasser mit Hilfe eines Faßrührers dispergiert. Nach Zugabe von 50,9 kg Isobutanol wird der Ansatz 4 Stunden bei 160°C gerührt. Anschließend wird auf 80°C abgekühlt und 1,86 kg ®Licolub WE 40 (Clariant GmbH) zugegeben und 30 Minuten unter Rühren unter Rückfluss erhitzt. Anschließend wird das Isobutanol durch Wasserdampfdestillation entfernt und man erhält eine wässrige Suspension von mit Wachs belegtem Pigment P.O. 72.
Die wässrige Suspension wird durch Passieren durch eine Kolloid-Mühle homogenisiert.
Anschließend wird die homogene Suspension in einem Sprühturm mit Einstoffdüse versprüht (Gaseintrittstemperatur: 260°C; Gasaustrittstemperatur: 120°C). Man erhält ein kugelförmiges Pigmentgranulat.
Die Coloristik des Granulats wurde in Polyethylen geprüft und entspricht dem Pulvertyp.

## Patentansprüche

1. Verfahren zur Herstellung eines Pigmentgranulats, **dadurch gekennzeichnet, daß** ein organisches Pigment während des Finishprozesses in einem organischen oder wäßrig-organischen Medium mit einem Wachs oder einem wachsartigen Polymer versetzt wird, dann das organische Lösemittel entfernt wird und eine wäßrige Suspension des Pigments sprühgetrocknet wird, wobei das organische Pigment in Mengen von 50 bis 99 Gew.-% und das Wachs oder wachsartige Polymer in Mengen von 1 bis 50 Gew-%, hexogen auf das Gesamtgewicht des Pigmentgranulats, eingesetzt wird.

2. Verfahren nach Anspruch 1, **dadurch gekennzeichnet, daß** ein organisches Pigment während des Finishprozesses in einem organischen oder wäßrig-organischen Medium mit einem Wachs oder einem wachsartigen Polymer versetzt wird, und die nach dem Entfernen des organischen Lösemittels durch Wasserdampfdestillation oder Auswaschen mit Wasser erhaltene wäßrige Suspension sprühgetrocknet wird.

3. Verfahren nach Anspruch 1 oder 2, **dadurch gekennzeichnet, daß** das organische Pigment ein Azopigment oder ein polycyclisches Pigment ist.

4. Verfahren nach Anspruch 3, **dadurch gekennzeichnet, daß** das polycyclische Pigment ein Isoindolinon-, Isoindolin-, Anthanthron-, Thioindigo-, Chinophthalon-, Anthrachinon-, Dioxazin-, Phthalocyanin-, Chinacridon-, Perylen-, Perinon-, Diketopyrrolopyrrol- oder Azomethinpigment ist.

5. Verfahren nach einem oder mehreren der Ansprüche 1 bis 4, **dadurch gekennzeichnet, daß** das Wachs ein Naturwachs, ein modifiziertes Naturwachs, ein teilsynthetisches Wachs, ein vollsynthetisches Wachs, ein Amidwachs oder ein chlor- oder fluorhaltiges Polyolefinwachs ist.

6. Verfahren nach Anspruch 5, **dadurch gekennzeichnet, daß** das vollsynthetische Wachs ein Polyolefinwachs, ein Cycloolefincopolymerwachs oder ein Polyethylenglykolwachs ist.

7. Verfahren nach Anspruch 6, **dadurch gekennzeichnet, daß** das Polyolefinwachs ein polare Gruppen enthaltendes Polyolefinwachs ist, entstanden durch nachträgliche Oxidation des Polyolefinwachses, durch Pfropfreaktion mit Carbonsäure-, Carbonsäureester-, Carbonsäureanhydrid- oder Hydroxygruppen enthaltenden Monomeren oder durch Copolymerisation aus einem Olefin und einem Carbonsäure-,Carbonsäureester-, Carbonsäureanhydrid- oder Hydroxygruppen enthaltenden Monomer.

8. Verfahren nach einem oder mehreren der Ansprüche 1 bis 7, **dadurch gekennzeichnet, daß** das Wachs einen Tropfpunkt zwischen 60 und 180°C, vorzugsweise zwischen 80 und 140°C, hat.

9. Verfahren nach einem oder mehreren der Ansprüche 1 bis 4, **dadurch gekennzeichnet, dass** das wachsartige Polymer ein thermoplastisches Polyester-, Epoxid-, Styrol-Acrylat-Copolymer-, Styrol-Butadien-Copolymer- oder ein Cycloolefin-Copolymer-Harz ist.

10. Verfahren nach einem oder mehreren der Ansprüche 1 bis 9, **dadurch gekennzeichnet, daß** das organische Pigment in Mengen von 60 bis 95 Gew.-%, und das Wachs oder Polymer in Mengen von 5 bis 40 Gew.-%, bezogen auf das Gesamtgewicht des Pigmentgranulats, eingesetzt wird.

11. Verfahren nach einem oder mehreren der Ansprüche 1 bis 10, **dadurch gekennzeichnet, daß** der Finishprozess bei einer Temperatur von 20 bis 200°C, vorzugsweise 60 bis 180°C, durchgeführt wird.

12. Verfahren nach einem oder mehreren der Ansprüche 1 bis 11, **dadurch gekennzeichnet, daß** das organische Medium des Finishprozesses n-Butanol, Isobutanol, n-Octanol, Isooctanol, Benzol, Toluol, Xylol, Kresol, Chlorbenzol, 1,2-Dichlorbenzol, Ethylacetat, Butylacetat, Methylethylketon, Methylisobutylketon, Cyclohexanon, N-Methylpyrrolidon, Dimethylsulfoxid oder Sulfolan ist.

13. Verfahren nach einem oder mehreren der Ansprüche 1 bis 12, **dadurch gekennzeichnet, dass** vor oder während des Finishprozesses ein Tensid zugegeben wird.

## Claims

1. A process for the preparation of pigment granules, which comprises adding a wax or a waxy polymer to an organic pigment during the finish process in an organic or aqueous organic medium, then removing the organic solvent and spray-drying an aqueous suspension of the pigment, where the organic pigment is used in amounts of from 50 to 99% by weight and the wax or waxy polymer is used in amounts of from 1 to 50% by weight, based on the total weight of the pigment granules..

2. The process as claimed in claim 1, wherein a wax or a waxy polymer is added to an organic pigment during the finish process in an organic or aqueous organic medium and the aqueous suspension obtained after removal of the organic solvent by steam distillation or washing out with water is spray-dried.

3. The process as claimed in claim 1 or 2, wherein the organic pigment is an azo pigment or a polycyclic pigment.

4. The process as claimed in claim 3, wherein the polycyclic pigment is an isoindolinone, isoindoline, anthanthrone, thioindigo, quinophthalone, anthraquinone, dioxazine, phthalocyanine, quinacridone, perylene, perinone, diketopyrrolopyrrole or azomethine pigment.

5. The process as claimed in one or more of claims 1 to 4, wherein the wax is a natural wax, a modified natural wax, a semisynthetic wax, a fully synthetic wax, an amide wax or a chlorine- or fluorine-containing polyolefin wax.

6. The process as claimed in claim 5, wherein the fully synthetic wax is a polyolefin wax, a cycloolefin copolymer wax or a polyethylene glycol wax.

7. The process as claimed in claim 6, wherein the polyolefin wax is a polyolefin wax containing polar groups and formed by subsequent oxidation of the polyolefin wax, by a graft reaction with monomers containing carboxyl, carboxylic ester, carboxylic anhydride or hydroxyl groups or by copolymerization of an olefin and a monomer containing carboxyl, carboxylic ester, carboxylic anhydride or hydroxyl groups.

8. The process as claimed in one or more of claims 1 to 7, wherein the wax has a drop point of from 60 to 180°C, preferably from 80 to 140°C.

9. The process as claimed in one or more of claims 1 to 4, wherein the waxy polymer is a thermoplastic polyester, epoxide, styrene/acrylate copolymer, styrene/butadiene copolymer or cycloolefin copolymer resin.

10. The process as claimed in one or more of claims 1 to 9, wherein the organic pigment is used in amounts of from 60 to 95% by weight, and the wax or polymer in amounts of from 5 to 40% by weight, based on the total weight of the pigment granules.

11. The process as claimed in one or more of claims 1 to 10, wherein the finish process is carried out at a temperature of from 20 to 200°C, preferably from 60 to 180°C.

12. The process as claimed in one or more of claims 1 to 11, wherein the organic medium of the finish process is n-butanol, isobutanol, n-octanol, isooctanol, benzene, toluene, xylene, cresol, chlorobenzene, 1,2-dichlorobenzene, ethyl acetate, butyl acetate, methyl ethyl ketone, methyl isobutyl ketone, cyclohexanone, N-methylpyrrolidone, dimethyl sulfoxide or sulfolane.

13. The process as claimed in one or more of claims 1 to 12, wherein a surfactant is added before or during the finish process.

## Revendications

1. Procédé de préparation d'un granulé pigmentaire, **caractérisé en ce qu'**on ajoute à un pigment organique, pendant l'opération de finition dans un milieu organique ou aqueux-organique, une cire ou un polymère cireux, puis on élimine le solvant organique et on sèche par atomisation la suspension aqueuse du pigment, le pigment organique étant utilisé en des quantités de 50 à 99 % en poids, et la cire ou le polymère cireux étant utilisé en des quantités de 1 à 50 % en poids, par rapport au poids total du granulé pigmentaire.

2. Procédé selon la revendication 1, **caractérisé en ce qu'**on ajoute à un pigment organique, pendant l'opération de finissage, dans un milieu organique ou aqueux-organique, une cire ou un polymère cireux et on sèche par atomisation la suspension aqueuse obtenue après élimination du solvant organique par distillation à la vapeur d'eau ou lavage à l'eau.

3. Procédé selon la revendication 1 ou 2, **caractérisé en ce que** le pigment organique est un pigment azoïque ou un pigment polycyclique.

4. Procédé selon la revendication 3, **caractérisé en ce que** le pigment polycyclique est un pigment d'isoindolinone, d'isoindoline, d'anthanthrone, de thioindigo, de quinophtalone, d'anthraquinone, de dioxazine, de phtalocyanine, de quinacridone, de pérylène, de périnone, de dicétopyrrolopyrrole ou d'azométhine.

5. Procédé selon l'une ou plusieurs des revendications 1 à 4, **caractérisé en ce que** la cire est une cire naturelle, une cire naturelle modifiée, une cire partiellement synthétique, une cire entièrement synthétique, une cire d'amide ou une cire de polyoléfine contenant du chlore ou du fluor.

6. Procédé selon la revendication 5, **caractérisé en ce que** la cire entièrement synthétique est une cire de polyoléfine, une cire de copolymère cyclooléfinique ou une cire de polyéthylèneglycol.

7. Procédé selon la revendication 6, **caractérisé en ce que** la cire de polyoléfine est une cire de polyoléfine contenant des groupes polaires, obtenue par oxydation après-coup de la cire de polyoléfine, par une réaction de greffage avec des monomères contenant des groupes acide carboxylique, ester d'acide carboxylique, anhydride carboxylique ou hydroxy, ou par copolymérisation à partir d'une oléfine et d'un monomère contenant des groupes acide carboxylique, ester d'acide carboxylique, anhydride carboxylique ou hydroxy.

8. Procédé selon l'une ou plusieurs des revendications 1 à 7, **caractérisé en ce que** la cire a un point de goutte compris entre 60 et 180°C et de préférence entre 80 et 140°C.

9. Procédé selon l'une ou plusieurs des revendications 1 à 4, **caractérisé en ce que** le polymère cireux est une résine de polyester, d'époxyde, de copolymère styrène-acrylate, de copolymère styrène-butadiène ou de copolymère de cyclooléfine.

10. Procédé selon l'une ou plusieurs des revendications 1 à 9, **caractérisé en ce que** le pigment organique est utilisé en des quantités de 60 à 95 % en poids, et la cire ou le polymère en des quantités de 5 à 40 % en poids, par rapport au poids total du granulé pigmentaire.

11. Procédé selon l'une ou plusieurs des revendications 1 à 10, **caractérisé en ce que** l'opération de finissage est mise en oeuvre à une température de 20 à 200°C et de préférence de 60 à 180°C.

12. Procédé selon l'une ou plusieurs des revendications 1 à 11, **caractérisé en ce que** le milieu organique de l'opération de finissage est le n-butanol, l'isobutanol, le n-octanol, l'isooctanol, le benzène, le toluène, le xylène, le crésol, le chlorobenzène, le 1,2-dichlorobenzène, l'acétate d'éthyle, l'acétate de butyle, la méthyléthylcétone, la méthylisobutylcétone, la cyclohexanone, la N-méthylpyrrolidone, le diméthylsulfoxyde ou le sulfolanne.

13. Procédé selon l'une ou plusieurs des revendications 1 à 12, **caractérisé en ce qu'**on ajoute un tensioactif avant ou pendant l'opération de finissage.
